(19) **Europäisches Patentamt**

**European Patent Office**

**Office européen des brevets**

(11) **EP 1 195 917 B1**

(12) **EUROPEAN PATENT SPECIFICATION**

(45) Date of publication and mention
of the grant of the patent:
**25.02.2004 Bulletin 2004/09**

(51) Int Cl.$^7$: **H04B 1/707**, H04L 27/34

(21) Application number: **01305283.2**

(22) Date of filing: **18.06.2001**

(54) **Method for peak to average power ratio reduction in wireless communication system**

Verfahren zur Verringerung des Verhältnisses zwischen Spitzen- und mittlerer Leistung in einem drahtlosen Kommunikationssystem

Procede de Réduction du rapport de puissance de crete à la puissance moyenne dans un système de communication sans fil

(84) Designated Contracting States:
**DE FR GB IT**

(30) Priority: **02.08.2000 US 630455**

(43) Date of publication of application:
**10.04.2002 Bulletin 2002/15**

(73) Proprietor: **LUCENT TECHNOLOGIES INC.**
**Murray Hill, New Jersey 07974-0636 (US)**

(72) Inventors:
• **Zhengxiang, Ma**
**Summit, New Jersey 07901 (US)**

• **Polakos, Paul Anthony**
**Marlboro, New Jersey 07746 (US)**

(74) Representative:
**Buckley, Christopher Simon Thirsk et al**
**Lucent Technologies Inc.,**
**5 Mornington Road**
**Woodford Green, Essex IG8 0TU (GB)**

(56) References cited:
**EP-A- 0 924 870      WO-A-00/13337**
**WO-A-00/45518      WO-A-99/59265**
**US-A- 6 097 714**

**Description**

This invention relates to methods for reducing peak to average power ratio (PAR) in a communication system.

DESCRIPTION OF BACKGROUND ART

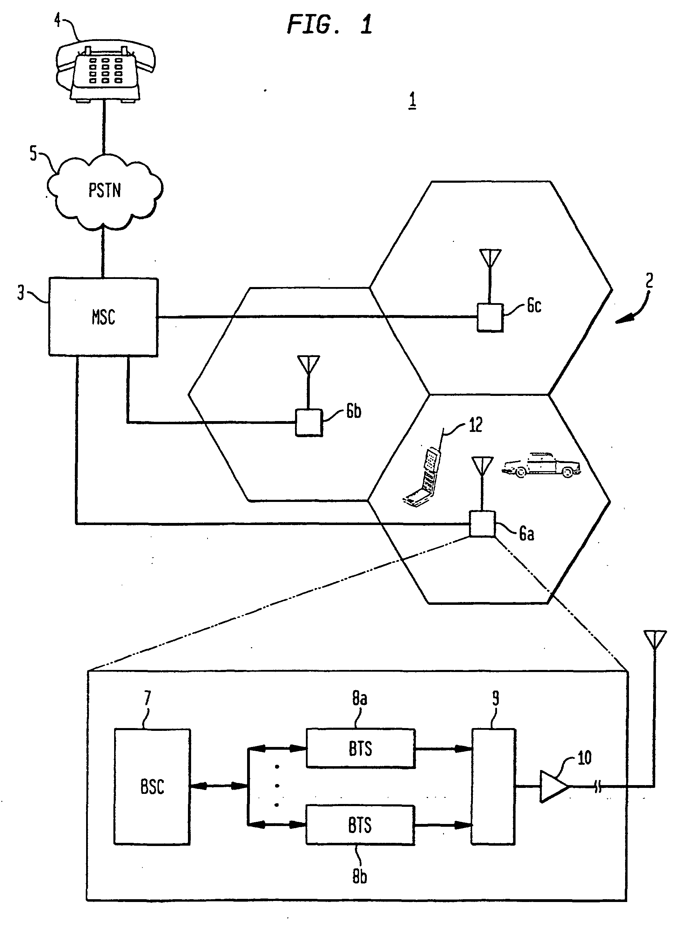

Figure 1 depicts a schematic diagram of a wireless communications system 1 which provides wireless communications service to a wireless unit 12 that is situated within a geographic region 2. A Mobile Switching Center 3 is responsible for, among other things, establishing and maintaining calls between wireless units and calls between a wireless unit and a wireline unit (e.g., wireline unit 4). As such, a MSC 3 interconnects the wireless units within its geographic region 2 with a public switched telephone network (PSTN) 5. The geographic area serviced by the MSC 3 is divided into spatially distinct areas called "cells." As depicted in figure 1, each cell is schematically represented by one hexagon in a honeycomb pattern; in practice however, each cell has an irregular shape that depends on the topography of the terrain surrounding the cell. Typically, each cell contains a base station (e.g. base stations 6a-c). The base station and a wireless unit communicate voice and/or data over a downlink and an uplink, wherein the downlink carries communication signals over at least one downlink channel from the base station to the wireless unit and the uplink carries communication signals on at least one uplink channel from the wireless unit to the base station.

A typical base station comprises a base station controller (BSC) 7 which administers the radio resources for the base station and relays information to the MSC 3. For example, the BSC 7 extracts radio related information, such as pilot signal measurements, from access channel messages to facilitate traffic channel assignment. The base station also comprises base station transceivers (BTSs) 8a-i and antennas that the base station uses to actually establish the wireless communications links with the wireless units in that cell. There are many different schemes for determining how wireless units and base stations communicate in a cellular communications system. For example, wireless communications links between the wireless units and the base stations can be defined according to different radio protocols, such as code division multiple access (CDMA), or wideband code division multiple access (WCDMA), prior to transmission over the antenna, the communication signals on forward links from the different BTSs are combined by a combiner/multiplexer 9 and amplified by a high power amplifier.

An ideal power amplifier amplifies an input signal with no waveshape alteration. The ideal power amplifier is therefore characterized as having a transfer function (input signal vs. output signal) which is linear with no transfer function discontinuities. In practice, a power amplifier, however, has a transfer function with nonlinear and "linear" regions. Whether the power amplifier is operating in a linear or nonlinear region depends on the amplitude of the input signal. For the power amplifier to achieve as near to linear operation as possible, the power amplifier is designed to operate within its linear region given the range of possible input signal amplitudes. If the input signal has an amplitude which causes the power amplifier to operate outside the linear region, the power amplifier introduces nonlinear components or distortion to the signal. When the input signal possesses peak amplitudes which cause the amplifier to compress, to saturate (no appreciable increase in output amplitude with an increase in input amplitude) or to shut-off (no appreciable decrease in output amplitude with a decrease in input amplitude), the amplifier is being overdriven, and the output signal is clipped or distorted in a nonlinear fashion. In addition to distorting the signal, the clipping or nonlinear distortion of the input signal, generates spectral regrowth or adjacent channel power (ACP) that can interfere with an adjacent frequency.

In wireless communications systems, high power amplification of signals for transmission are commonly encountered with very large peak to average power ratios (PAR). For example, in a CDMA system, a single loaded 1.25 Mhz wide carrier can have a PAR of 11.3 dB, and the PAR in a WCDMA system can be even larger. These signals have to be amplified fairly linearly to avoid generating ACP. To satisfy the linearity requirement, power amplifiers are usually operated in Class A and Class AB configurations. To be able to handle large peaks, the amplifiers are biased at high bias currents. The efficiency of the amplifiers is low because of the high bias and the high peak to average power ratios.

The aforementioned WCDMA systems use a third generation wireless PCS standard which has been undergoing development by the Association of Radio Industries and Businesses (ARIB), and is a standard where each user of a system employing the standard relies on time multiplex pilot symbols.

The interest in WCDMA has increased significantly due to the demand for greater mobility and more powerful data access brought about by the information age. The prevalence of the Internet and email has risen expediently, and because the World Wide Web has facilitated their ease of use, the Internet and email are now beginning to reach a mass audience. However, in order for these technologies to reach their full potential, they must be accessible in a mobile environment. WCDMA has the capabilities to embrace this mobile need, but a significant disadvantage of the WCDMA technology over the current CDMA technologies has surfaced.

As indicated, in conventional CDMA systems, there exist both downlink and uplink channels. Of relevance to the present invention are the downlink channels. The downlink physical structure of conventional CDMA consists of a pilot channel, a paging channel, a synchronization channel, and traffic channels. The first three channels are common control channels and the forth channel is a dedicated channel. A common channel is a shared channel, and a dedicated channel is one that is solely allocated for the use of a single user.

A mobile station uses the pilot channel for coherent demodulation, acquisition, time delay tracking, power control measurements, and as an aid for handovers. Therefore, in order to obtain a reliable phase reference for coherent demodulation, the pilot channel is transmitted with higher power than the traffic channels.

Downlink CDMA broadcast channels consist of broadcast channels used for control, and the traffic channels used to carry user information. A mobile station is able to differentiate between logical channels due to a unique code assigned to each channel. This code is known as a Walsh code and has orthogonal properties.

Each Walsh code has a length of 64 at a fixed chip rate of 1.2288 Mc/s separate the physical channels. The Walsh function consisting of all zeros W0 (Walsh code number 0) is used for the pilot channel (note, common to all channels). W1-W7 are used for paging channels. The synchronization channel is W32, and traffic channels are W8 to W31 and W33 to W63.

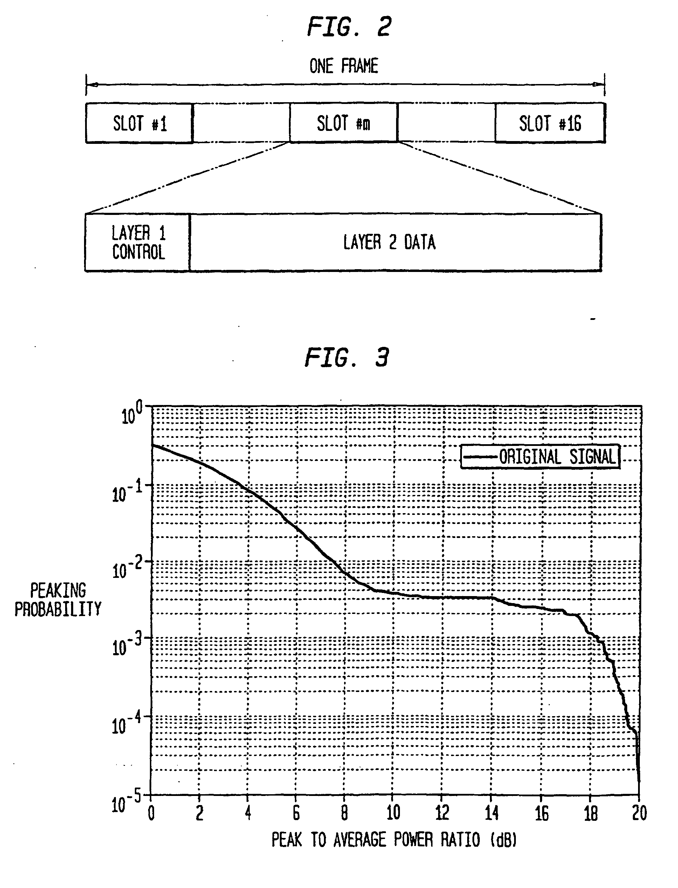

WCDMA uses time multiplex pilot symbols on dedicated traffic channels, while the conventional CDMA systems use common continuous pilot channels. In particular, as is seen in Figure 2, on downlink, layer 2 data is time multiplexed with layer 1 control information within each slot. The layer 1 control information consists of known pilot symbols for downlink channel estimation and a transport format indicator (TFI). The pilot symbols are used instead of a common pilot channel in order to support, for example, the use of adapitve antenna arrays in the base station, also on the downlink. The pilot symbols also allow for more efficient downlink closed-loop power control.

However, while the use of time multiplex pilot symbols has been found to be in some cases advantageous over using a common continuous pilot channel, the technology exhibits significantly larger PAR over conventional CDMA technologies. This places WCDMA systems at a significant disadvantage over conventional CDMA systems in terms of power amplification.

For example, in a system implemented with WCDMA, when there is a large number of users running at the same symbol rate, because each of the pilot symbols for each of the users line up in phasor space, the aggregate of these pilot symbols results in a large PAR. For example, if the first chip of each spreading code is the same for each of the users, and if there are 64 total users, the resulting peak power is 64 times (18 dB) the average power.

Figure 3 illustrates a graphical signal representation generated by a conventional WCDMA system running 64 users at equal power of 32 KSPS; the PAR is 19.5 dB with a peaking probability of about $10^{-4}$. These values are much higher than the conventional CDMA systems. The PAR is obtained by averaging over 5 radio frames. The plateau shown in Figure 2 is due to the pilot symbols having a much larger peak power value than the rest of the signal.

EP-A-0924870 discloses apparatus for reducing power amplifier headroom in a wireless transmission system and comprising an orthogonal modulation circuit and a phase rotation circuit coupled to the orthogonal modulation circuit. The orthogonal modulation circuit utilizes a Walsh code for modulating an in-phase signal and a quadrature signal. The orthogonal modulation circuit has an in-phase output and a quadrature output. The phase rotation circuit rotates the phase of the in-phase signal and the quadrature signal, producing a phase rotated in-phase signal and a phase rotated quadrature signal. Multiple Walsh code defined channels are associated with a particular wireless user.

US-A-6097714 discloses code multiplexing transmitting apparatus which spread-spectrum modulates transmission data of a plurality of channels by spreading codes that differ from one another, combines the spread-spectrum signals of each of the channels, and transmits the resultant spread-spectrum modulated signal. A spread-spectrum modulating unit for each channel includes a phase shifter for shifting, by a predetermined angle channel by channel, the phase of a position vector of the spread-spectrum modulated signal of each channel. As the result of such phase control, the phases of pilot signal portions of the spread-spectrum modulated signals of the respective channels are shifted relative to one another so that the peak values of the code-multiplexed signal can be suppressed.

WO 00/13337 describes several methods and corresponding apparatus for reducing peak to average power in signals transmitted in a wireless communications system, particularly with respect to pilot symbols transmitted from a base station to several user stations. A large peak to average amplitude of inserted pilot symbols has been found to result from a common sign chip position that exists in orthogonal codes, such as Walsh codes. In a first embodiment, the Walsh codes are multiplied by a random value ± 1. Under a second embodiment, the common sign chip position is eliminated in each Walsh code. The user station then inserts the missing chip position to regain orthogonality. In a third embodiment the base station transmits pilot symbols, on a separate pilot channel, in only symbol positions that user stations expect to find pilot symbols. In a fourth embodiment, each Walsh code is randomly shifted.

WO 00/45518 (cited under Art. 54(3) EPC) discloses a method and apparatus for reducing peak to average ratio in a system using auxiliary pilot channels as described in the TIA/EIA TR45.5 "cdma2000 ITU-R RTT Candidate Submission" to the ITU for consideration in third generation wireless communication systems. A first method proposed to deal with the above stated problem alters the phase of the auxiliary pilot channels to reduce or prevent the auxiliary pilot channels from adding constructively. A second method proposed to deal with the above stated problem gates out the portion of the auxiliary pilot channels that add constructively.

According to this invention there is provided a method as claimed in claim 1.

The present invention provides a method to reduce peak to average power ratio in a communication system. According the preferred embodiments, the method includes the steps of providing a plurality of code channels, such as Wash code channels, and assigning each of the plurality of code channels a phase rotation multiple of either $\frac{\pi}{2}$ or $\pi$. Therefore, each of the plurality of code channels is individually spaced from one another using the phase rotation multiple, or phase offset.

The method of the present invention provides a method for PAR reduction in systems employing pilot symbols among individual users, for example, common time multiplex pilot symbols on dedicated Walsh code channels. The PAR for such systems is reduced by rotating individual Walsh code channels, with respect to each other, by a certain amount. Rotating the individual Walsh code channels can reduce the possibility that that they will lineup and increase the PAR. A lookup table is used to rotate the individual Walsh code channels, or alternatively, the individual Walsh code channels may be rotated dynamically.

## BRIEF DESCRIPTION OF THE DRAWINGS

The present invention will become more fully understood from the detailed description given hereinbelow and the accompanying drawings which are given by way of illustration only, and thus are not limitative of the present invention, and wherein:

Figure 1 illustrates the basic architecture of a conventional communications system;
Figure 2 illustrates the basic WCDMA frame structure for downlink;
Figure 3 illustrates a graphical signal representation generated by a convention WCDMA system running 64 users at equal power of 32 KSPS; the PAR is 19.5 dB and the peaking probability is about 10[-4]; and
Figure 4 illustrates a graphical representation of signal PAR levels achieved using angle rotations of either $\frac{\pi}{2}$ or $\pi$.

## DETAILED DESCRIPTION OF THE INVENTION

In the following, the WCDMA standard has been used to describe the novel features of the present invention. However, it should be readily understood from the following description that such is intended to be merely illustrative of the principles of the present invention, and should not be construed as limiting. In particular, the present invention may be implemented with other standards. More particularly, standards that use time multiplex pilot symbol for each individual user.

The present invention can be used to calculate phase offsets of Walsh code channels dynamically, or phase offsets can be preprocessed and stored in a lookup table (described in detail hereinafter). Phase offsetting of Walsh codes may occur in the base station. In particular, the processing circuitry for the phase offsets can be an integral part of either the BSC or the BTSs, or alternatively, the BSC and the BTSs may share the processing of the phase offsets. However, the processing circuitry may also be employed in other parts of a communications scheme. For example, processing may also take place in the MSC. The processing circuitry may be any one of, or a combination of: software, hardware, digital signal processors (DSPs), integrated circuitry, conventional digital or analog circuitry, etc.

According to an Embodiment of the present invention, the lookup table may be stored in the base station, as the downlink occurs between the base station and the wireless unit. The lookup table stored in the base station may be accomplished using various technologies. For example, the lookup table my be stored using one of, or a combination of: software, hardware, digital signal processors (DSPs), integrated circuitry, conventional digital or analog circuitry, etc. However, the lookup table is not limited to being stored in the base station. For example, the lookup table may also be stored in the MSC, or any other element in a communication system capable of storing and functionally operating the lookup table.

As previously indicated, the lookup table is intended to be merely illustrative of the present invention. For example, contents of the hereinafter described lookup table may also be assigned dynamically.

In order to reduce PAR for a whole signal, it is necessary to reduce the peak power of the pilot symbols. By rotating each individual Walsh code properly, the pilot symbols no longer line up in phasor space, and therefore the result is a much smaller peak power value.

The rotating of each individual Walsh code channel does not affect the orthogonality between the channels. For example, the vectors (1 1) and $e^{(i\theta)}$ - $e^{(i\theta)}$ are orthogonal to each other regardless of the value of θ.

There are many ways to optimally assign the rotationing of different channels. One simple way is to optimize as new users are assigned. When a new user needs to be assigned a certain Walsh code, it is desirable to assign the rotation angle as a new code is added. In practice, because creating an arbitrary angle rotation is difficult, it is preferable to restrict the rotation angles to either multiples of $\frac{\pi}{2}$ or $\pi$. However, other multiples may also be used if such is desired.

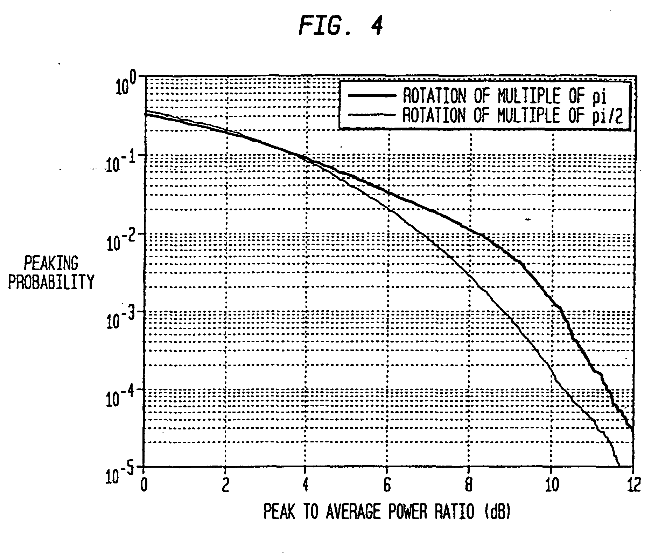

Figure 4 illustrates a graphical representation of signal PAR levels achieved using angle rotations of either $\frac{\pi}{2}$

or $\pi$. As seen in the figure, when using the rotation angles $\frac{\pi}{2}$ or $\pi$, the resulting PAR is clearly advantageous over the conventional PAR level shown in Figure 3. Specifically, the rotation of $\pi$ results in a PAR for 64 users of 11.3 dB. Using the rotation of $\frac{\pi}{2}$, the resulting PAR is 10.4 dB, which is an 8 to 9 dB improvement over the PAR level achieved by conventional WCDMA systems.

Table I, hereinbelow, lists the results of a simulation using the techniques of the present invention implemented with several different numbers of users running at 32 KSPS.

## Table I

## Summary of Simulated PAR Results at $10^{-4}$ Peaking Probability

| # of 32 ksps Users | Sequential Selection of Walsh codes | | |
|---|---|---|---|
| | Conventional PAR (dB) | PAR with $\pi$ Rotations (dB) | PAR with $\frac{\pi}{2}$ Rotations (dB) |
| 1 | 5.1 | N/A | N/A |
| 4 | 10.2 | 10.3 | 9.7 |
| 8 | 12.8 | 11.0 | 10.4 |
| 16 | 15.4 | 11.0 | 10.8 |
| 32 | 18.0 | 11.3 | 10.8 |
| 64 | 19.5 | 11.3 | 10.4 |
| 90 | 20.2 | 12.2 | 9.8 |
| 120 | 21.3 | 12.3 | 9.6 |

In order to implement the phase rotation using multiples of $\frac{\pi}{2}$ or $\pi$, the lookup table for assigning a particular Walsh code channel a particular phase rotation is used. Alternatively, the phase rotation may be assigned as new calls are processed; i.e. dynamically. However, using the lookup table to implement the present invention is advantageous, because such can be implemented easily using Digital Signal Processing (DSP) local to each channel element.

The method used for generating lookup tables for phase rotations, which produces minimal PAR for the pilot symbols having channels assigned with sequential Walsh codes and equal power, is as follows. To illustrate the method, a spreading factor of 8 is used by way of example; however, the method is not limited to a spreading factor of 8, and will function readily with a spreading factor of N (N=2, 4, 8...). The eight Walsh codes are shown in Table II hereinbelow.

## Table II

| Walsh codes having a Length of Eight | | | | | | | | |
|---|---|---|---|---|---|---|---|---|
| C0 | 1 | 1 | 1 | 1 | 1 | 1 | 1 | 1 |
| C1 | 1 | 1 | 1 | 1 | -1 | -1 | -1 | -1 |
| C2 | 1 | 1 | -1 | -1 | 1 | 1 | -1 | -1 |
| C3 | 1 | 1 | -1 | -1 | -1 | -1 | 1 | 1 |
| C4 | 1 | -1 | 1 | -1 | 1 | -1 | 1 | -1 |
| C5 | 1 | -1 | 1 | -1 | -1 | 1 | -1 | 1 |
| C6 | 1 | -1 | -1 | 1 | 1 | -1 | -1 | 1 |
| C7 | 1 | -1 | -1 | 1 | -1 | 1 | 1 | -1 |

Using C0 as a reference, assigning the phase rotation of $\frac{\pi}{2}$ to C1 gives a constant amplitude for C0 and C1 combined. The phases for the resulting chips are $(\frac{\pi}{4}, \frac{\pi}{4}, \frac{\pi}{4}, \frac{\pi}{4}, -\frac{\pi}{4}, -\frac{\pi}{4}, -\frac{\pi}{4}, -\frac{\pi}{4})$. When C2 and C3 are assigned the same phase rotation as C0 and C1, namely, zero and $\frac{\pi}{2}$, then the combination of C2 and C3 also provides a constant amplitude signal with phases for the chips being $(\frac{\pi}{4}, \frac{\pi}{4}, -\frac{3\pi}{4}, -\frac{\pi}{4}, -\frac{\pi}{4}, \frac{3\pi}{4}, \frac{3\pi}{4})$. These phases differ either zero or $\pi$ from that of the C0 and C1 combination. Therefore, if the C2 and C3 combination is rotated by $\frac{\pi}{2}$ and then combined with the original C0 and C1 combination, a constant amplitude signal is obtained. The resulting phases for the chips combined, C0, C1, C2 and C3, are $(\frac{\pi}{2}, \frac{\pi}{2}, 0, 0, 0, 0, \frac{\pi}{2}, \frac{\pi}{2})$.

The method can be carried out further to obtain a constant amplitude combination for all the codes, using the same manner shown above. The phase rotation lookup table derived is $(0, \frac{\pi}{2}, \frac{\pi}{2}, \pi, \frac{\pi}{2}, \pi, \pi, -\frac{\pi}{2})$. Using the method of the present invention, the lookup table may also be derived using $-\frac{\pi}{2}$ and still produce a constant amplitude signal.

A method used to obtain the above results is as follows. First, given a set of Walsh codes having a spreading factor of $N=2^n$, where $N$ is the number of Walsh codes and $n$ is the exponent corresponding the $N$ Walsh codes, create an $n$ dimensioned vector $V$ with each element therein being either $\frac{\pi}{2}$ or $-\frac{\pi}{2}$. Second, given a particular number $M$ ($M$ is between 0 and $N$-1) of the set of $N$ Walsh codes, create an $n$ bit binary vector $B = [B_1, B_2, ...B_n]$, wherein $B$ is the binary representation of the particular number $M$. Then, obtain a phase rotation assignment using the two vectors by finding the inner product $B \cdot V$. Repeat these steps for each sequential $M$ in the given set of Walsh codes. Each phase rotation for each Walsh code, sequentially, forms the lookup table. Plus or minus $\pi$ may also be used with a generally generic method similar to that given above. In such a case, a nearly constant amplitude signal may be achieved.

A lookup table generated by the above method sequentially assigns channels having a combined pilot signal with a constant amplitude. The PAR for pilot symbols having constant amplitude signal is 0 dB. However, if we apply pulse shaping to the signal, the signal will no longer have a constant amplitude. Specifically, the PAR for the pilot symbol will increase to between 5 - 6 dB after filtering, but will still be substantially . below that of random data. Even when the number of channels is not a power of 2, the PAR for the pilot is still small. For example, 50 channels can be subdivided into one group of 32 channels having an amplitude of $\sqrt{32}$, 16 having $\sqrt{16}$ and 2 having $\sqrt{2}$. The worse peak amplitude would be $\sqrt{32} + \sqrt{16} + \sqrt{2} = 11.07$, resulting in a PAR of 3.9 dB for the pilot. With filtering, the PAR may increase to between 7 - 8 dB; however, this is still lower than that of random data.

The invention being thus described, it will be obvious that the same may be varied in many ways. Such variations are not to be regarded as a departure from the scope of the invention as defined by the following claims.

**Claims**

1. A method of reducing peak to average power ratio in a communication system in which code channel assignments for a plurality N of code channels are requested by one or more users, the code channels assigned to the users by spacing each of the code channels from one another using a phase rotation, the method **CHARACTERIZED BY**:

   calculating a given phase rotation to be applied to each of the N code channels based on the inner product V. B of a first vector V and a second vector B, having a dimension n corresponding to the number N of codes and N = $2^n$ , with each element of the first vector V being plus or minus a given phase rotation the second vector B being a binary representation of a second code number M, $0 \leq M \leq N\text{-}1$.

2. A method as claimed in claim 1 wherein the code channels are Walsh code channels.

3. A method as claimed in claim 1 wherein each of the code channels are assigned a given phase rotation individually spaced from one another by a multiple of $\pm \pi/2$.

4. A method as claimed in claim 1 wherein each of the code channels are assigned a given phase rotation individually spaced from one another by a multiple of $\pm \pi$.

5. A method as claimed in claim 1 further including:

   repeating the calculating for each sequential N code for the first number of codes so that calculated phase rotations for each code channel sequentially forms a lookup table; and
   retrieving phase rotations from the lookup table for each code channel.

**Patentansprüche**

1. Verfahren zum Verringern des Spitze-Mittelwert-Leistungsverhältnisses in einem Kommunikationssystem, in dem Codekanalzuweisungen für eine Mehrzahl N von Codekanälen durch einen oder mehrere Benutzer angefordert werden, wobei die Codekanäle den Benutzern durch Beabstandung jedes der Codekanäle voneinander unter Verwendung einer Phasendrehung zugewiesen werden, **gekennzeichnet durch** folgendes:
   Berechnen einer an jeden der N Codekanäle anzulegenden gegebenen Phasendrehung auf Grundlage eines inneren Produkts V.B. eines ersten Vektors V und eines zweiten Vektors B mit einer Dimension n entsprechend der Anzahl N von Codes und $N = 2^n$, wobei jedes Element des ersten Vektors V plus oder minus einer gegebenen Phasendrehung ist, wobei der zweite Vektor B eine binäre Darstellung einer zweiten Codenummer M $0 \leq M \leq N-1$ ist.

2. Verfahren nach Anspruch 1, wobei die Codekanäle Walsh-Codekanäle sind.

3. Verfahren nach Anspruch 1, wobei jedem der Codekanäle eine gegebene Phasendrehung zugewiesen wird, die um ein Mehrfaches von $\pm\pi/2$ einzeln voneinander beabstandet sind.

4. Verfahren nach Anspruch 1, wobei jedem der Codekanäle eine gegebene Phasendrehung zugewiesen ist, die um ein Mehrfaches von $\pm\pi$ einzeln voneinander beabstandet sind.

5. Verfahren nach Anspruch 1, weiterhin mit folgendem:

   Wiederholen der Berechnung für jeden sequentiellen N Code für die erste Anzahl von Codes, so daß berechnete Phasendrehungen für jeden Codekanal sequentiell eine Nachschlagetabelle bilden; und
   Abberufen von Phasendrehungen aus der Nachschlagetabelle für jeden Codekanal.

**Revendications**

1. Procédé de réduction du rapport de la puissance de crête sur la puissance moyenne dans un système de communication dans lequel des attributions de canaux de code pour une pluralité de N canaux de code sont demandées par un ou plusieurs utilisateurs, les canaux de code étant attribués aux utilisateurs en espaçant chacun des canaux de code les uns des autres par rotation de phase, le procédé étant **CARACTERISE PAR** :

   le calcul d'une rotation de phase donnée à appliquer à chacun des N canaux de code basé sur le produit interne v.B d'un premier vecteur v et d'un deuxième vecteur B, ayant une dimension n correspondant au nombre N de codes et $N=2^n$, chaque élément du premier vecteur v étant plus ou moins une rotation de phase donnée, le deuxième vecteur B étant une représentation binaire d'un deuxième nombre de codes M, $0 \leq M \leq N-1$.

2. Procédé selon la revendication 1, dans lequel les canaux de code sont des canaux de code Walsh.

3. Procédé selon la revendication 1, dans lequel à chacun des canaux de code est attribuée une rotation de phase donnée espacée individuellement des autres par un multiple de $\pm \pi/2$.

4. Procédé selon la revendication 1, dans lequel à chacun des canaux de code est attribuée une rotation de phase donnée espacée individuellement des autres par un multiple de $\pm \pi$.

5. Procédé selon la revendication 1, comportant en outre :

   la répétition du calcul pour chaque code N séquentiel pour le premier nombre de codes de telle sorte que les rotations de phase calculées pour chaque canal de code forment séquentiellement une table de consultation ; et
   le recouvrement de rotations de phase depuis la table de consultation pour chaque canal de code.

FIG. 1

## FIG. 2

ONE FRAME

| SLOT #1 | | SLOT #m | | SLOT #16 |

| LAYER 1 CONTROL | LAYER 2 DATA |

## FIG. 3

## FIG. 4

PEAKING PROBABILITY

PEAK TO AVERAGE POWER RATIO (dB)

Legend: ROTATION OF MULTIPLE OF pi / ROTATION OF MULTIPLE OF pi/2